Europäisches Patentamt

European Patent Office

Office européen des brevets

(19)

(11) **EP 1 246 074 A2**

(12) **EUROPEAN PATENT APPLICATION**

(43) Date of publication:
**02.10.2002 Bulletin 2002/40**

(51) Int Cl.[7]: **G06F 17/24**

(21) Application number: **02002114.3**

(22) Date of filing: **29.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.03.2001 IT TO010241**

(71) Applicant: **A.BRE.MAR.S.R.L.**
**10146 Torino (IT)**

(72) Inventor: **Garavelli, Paolo**
**10141 Torino (IT)**

(74) Representative: **Garavelli, Paolo**
**A.BRE.MAR. S.R.L.,**
**Via Servais 27**
**10146 Torino (IT)**

(54) **Automated process and related system for creating, compiling and producing forms and documents for filing patent and trademark applications**

(57) A system is disclosed that is adapted to realize an automated process for creating, compiling and producing forms and documents for filing patent and trademark applications, comprising the steps of: collecting (F1) all necessary data through electronic transmission of data from a user (3) to a managing and processing unit (1); computing (F2) the total amount of required operations and checking the performed payment of the amount for the operation; automatically compiling (F3) the requested forms and documents depending on provided data; and producing (F4) the complied forms and documents.

Fig. 1

EP 1 246 074 A2

**Description**

The present invention refers to an automated process and to the relative system for creating, compiling and producing forms and documents for filing patent and trademark applicationss.

When a user wishes to file a patent and/or trademark application, both when he arranges by himself all the necessary documents, and when he turns for help to specialized professionals, he has to face a whole set of operations, often repetitive and of scarce technical content, to comply with the several legal provisions that such operations involve. When then the same user files many requestings of this type, many times during the year, the repetitive operations and the necessary time to complete them become even more burdensome.

With the diffusion of computers in today's daily activities, and with the diffusion of networks of computers (of the Internet, Intranet, etc. types) that allow both to share a greater and greater number of information among different users, and to exploit services and organizations that are responsible and specialized in particular operations, a tool is now available that allows improving and facilitating those operations that have more repetitive characters and that use already "automated" resources, such as for example the on-line payment through credit cards, with the related banking controls and the encrypted transmissions of reserved information.

Though having these tools available, there are nowadays no solutions that allow applying them to the problems involved in filing patent and trademark requestings as regards a high number of users.

Object of the present invention is solving the aforesaid prior art problems, by providing an automated process and its related system that allow reducing the repetitive operations to which a user is subjected when filing his own patent and trademark requestings, while providing him with a whole set of additional services made available by computers and their networks.

A further object of the present invention is providing a process and a system as mentioned above that allow, besides creating and producing (in paper or electronic form) filing forms and documents, also compiling the above forms and documents, with consequent savings of costs for the end user.

The above and other objects and advantages of the invention, that will result from the following description, are obtained by an automated process and its related system as described, respectively, in Claims 1 and 39. Preferred embodiments and non-trivial variations of the present invention are the object of the dependent Claims.

The present invention will be better described by some preferred embodiments, provided as a non-limiting example, with reference to the attached drawings, in which:

- Figure 1 is a schematic diagram that shows an embodiment of the system according to the present invention;
- Figure 2 is a schematic block diagram of the main steps of the process according to the present invention;
- Figure 3 is a detailed block diagram of the first step of the process of Fig. 1;

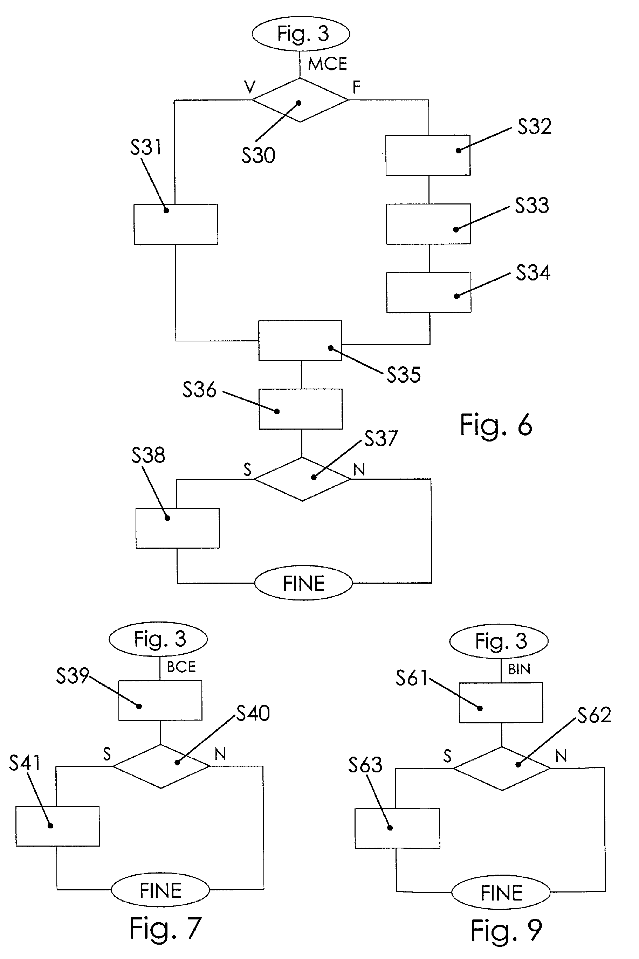

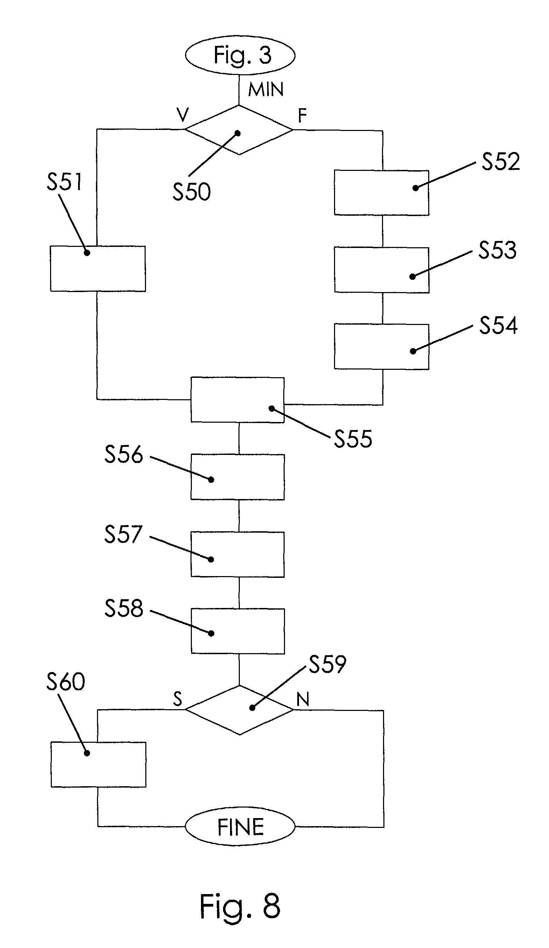

- Figures 4 to 9 are detailed block diagrams of alternative steps of the process of Fig. 3;

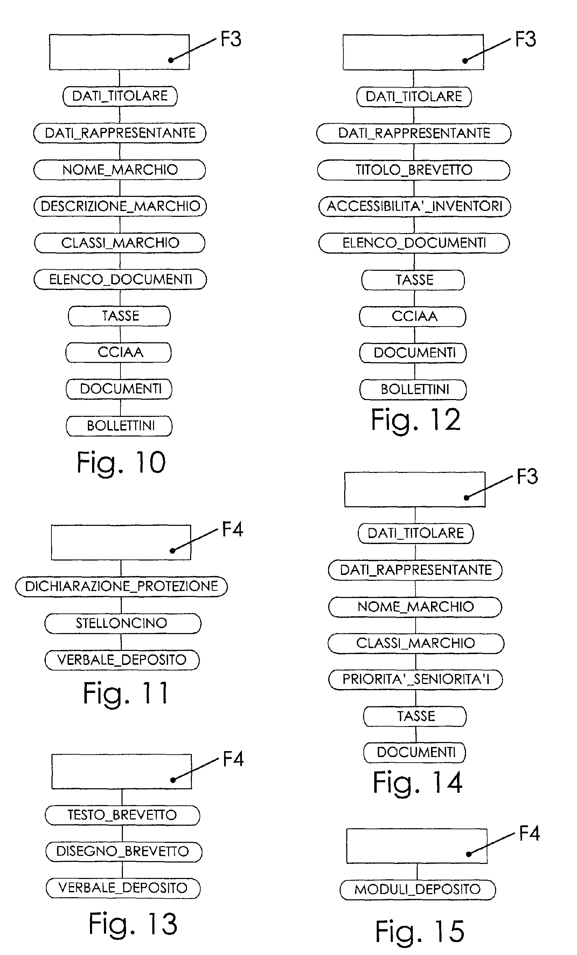

- Figures 10 and 11 show a list of processings to be performed for completing steps 3 and 4, respectively, of the process of Fig. 2, in a first alternative thereof;
- Figures 12 and 13 show a list of processings to be performed for completing steps 3 and 4, respectively, of the process of Fig. 2, in a second alternative thereof;
- Figures 14 and 15 show a list of processings to be performed for completing steps 3 and 4, respectively, of the process of Fig. 2, in a third alternative thereof;

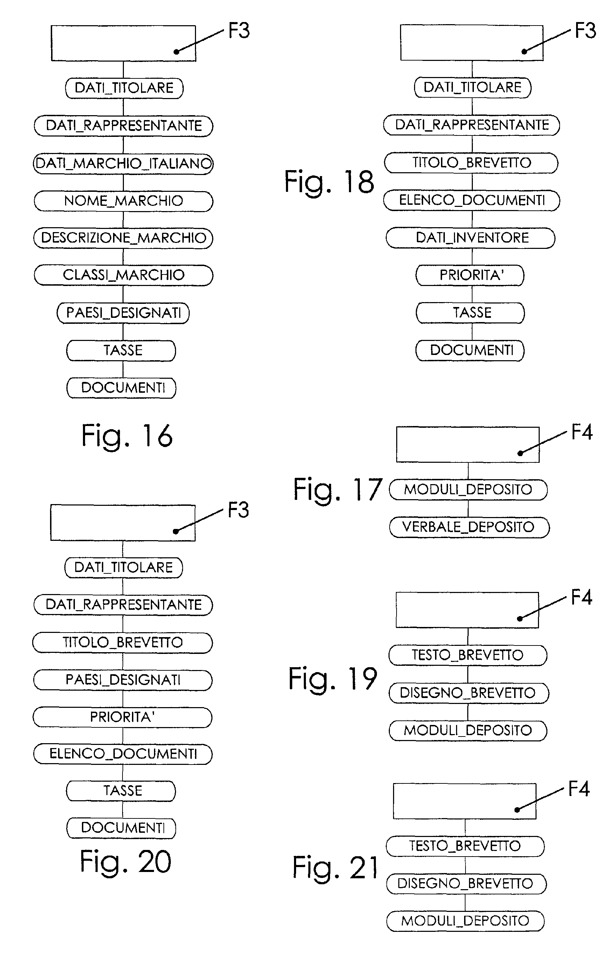

- Figures 16 and 17 show a list of processings to be performed for completing steps 3 and 4, respectively, of the process of Fig. 2, in a fourth alternative thereof;
- Figures 18 and 19 show a list of processings to be performed for completing steps 3 and 4, respectively, of the process of Fig. 2, in a fifth alternative thereof; and
- Figures 20 and 21 show a list of processings to be performed for completing steps 3 and 4, respectively, of the process of Fig. 2, in a sixth alternative thereof.

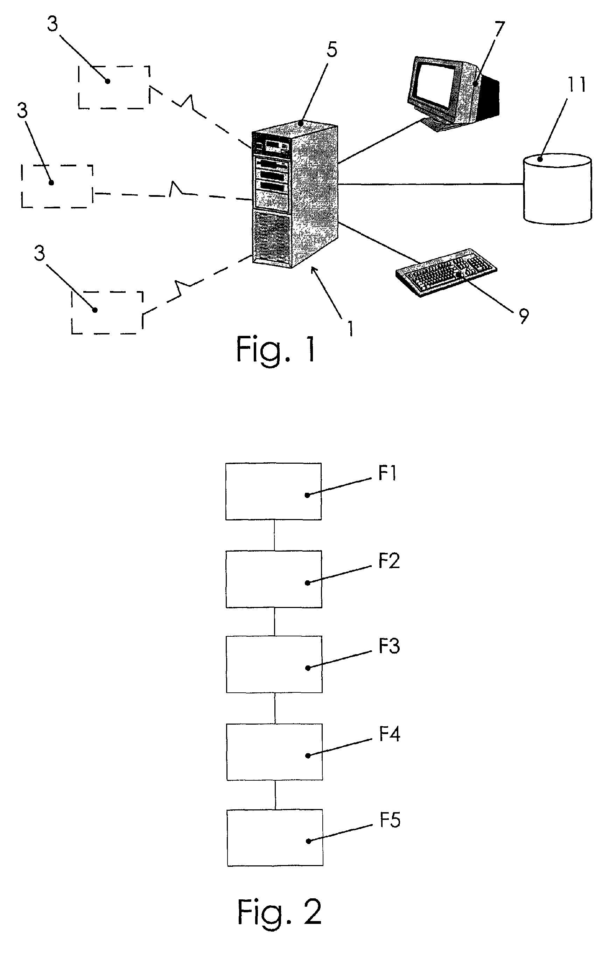

With reference to Fig. 1, a preferred, but non-limiting, embodiment is shown of the system adapted to realize the process of the invention. Such system substantially includes a central processing and managing unit 1 connected to a plurality of users 3 in a direct or remote way (for instance through networks of computers such as Internet, Intranet, etc.). To allow its operation, the central processing and managing unit 1 (for instance a so-called Central Processing Unit or CPU) further commonly comprises displaying means 5 (of the cathode rays or liquid crystals video type), data entering means 7 (for instance a keyboard) and data storage means 9 (for instance of the magnetic type, such as a hard disk or a tape unit or CD) on which both programs that allow realizing the process of the invention and files that contain registered users data 3 and information used by the process of the invention, are stored.

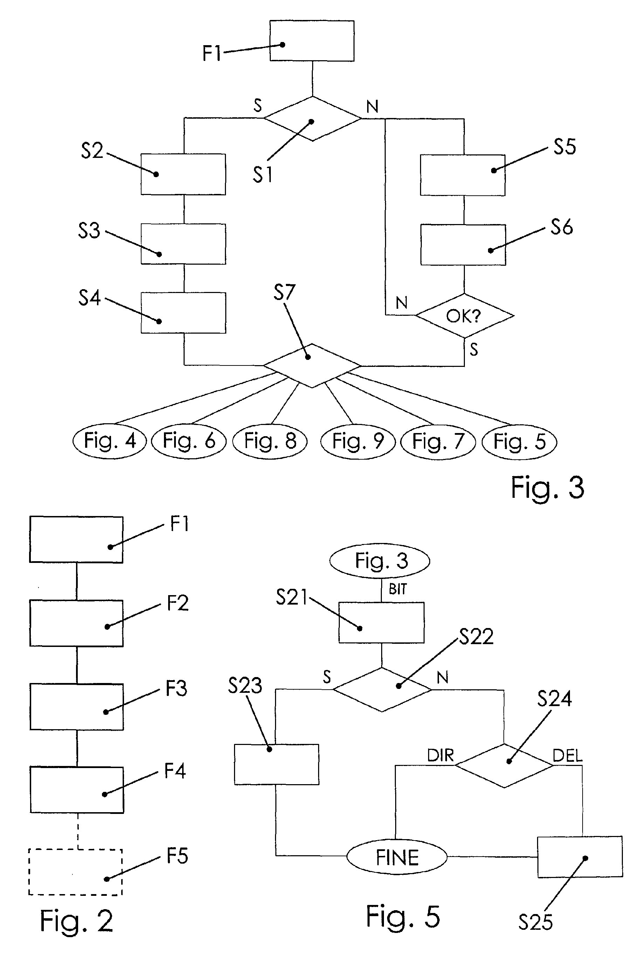

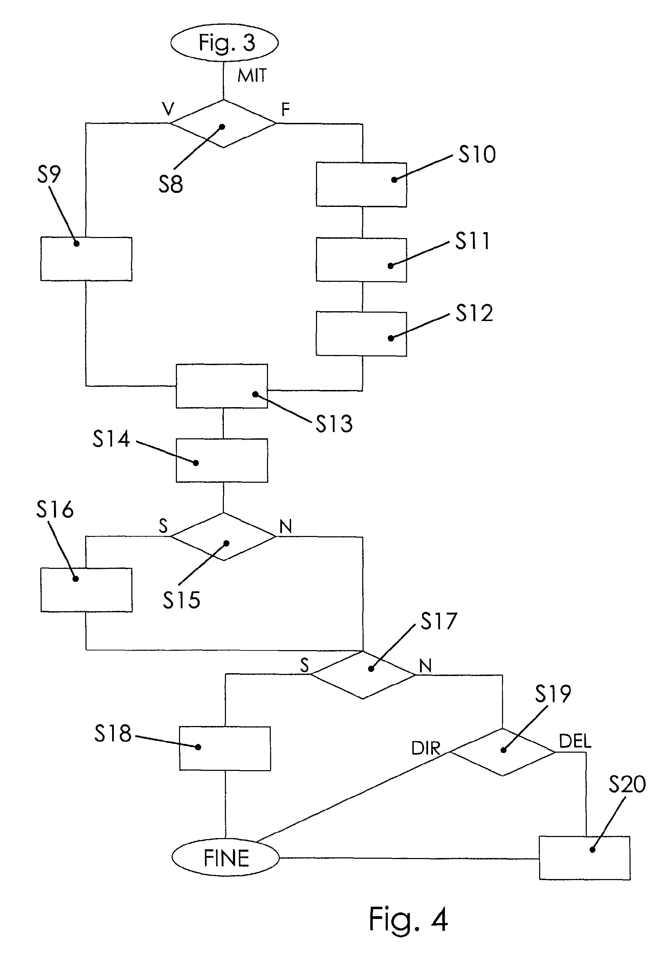

With reference to Fig. 2, the process of the invention, adapted to be performed by a system as shown in Fig. 1, comprises the steps of:

- collecting (F1) all necessary data, such step being performed by electronically filling-in displayed masks and by electronically transmitting data by the user 3 to the managing and processing unit 1;
- computing (F2), by the managing and processing unit 1, the total amount of the operation: this step further comprises checking the performed payment of the amount by the user 3 in the requested operation of creating and producing the forms;
- automatically compiling (F3), by the managing and processing unit 1, the required forms and documents depending on the provided data; and
- producing (F4), by the managing and processing unit 1, the compiled forms and documents.

In particular, the step of producing (F4) can be performed by printing the forms and documents on a paper medium and related physical transmission to the user 3; or the same step can be performed by storing the forms ande documents on electronic files and the related electronic transmission to the user 3.

The above-mentioned process can further comprise the step (F5) of filing the compiled patent and trademark requesting forms and documents by the Authorities responsible for receiving them.

Still particularly, according to a preferred practical embodiment of the process of the invention, the step of collecting (F1) comprises the steps of:

- checking (S1) whether the user 3 is a new or already registered user;
- if the user 3 is new, requesting (S2) his/its registry data (for instance name or denomination or legal name, address, possible date and place of birth, telephone and fax numbers) and his/its fiscal data (for instance fiscal code and/ or V.A.T. code) of the user 3;
- assigning (S3) to the user 3 a nome_utente, a codice_utente and a keyword;
- storing (S4) nome_utente, codice_utente and keyword in a data base 9;
- requesting (S7) the type of operation to be performed and arranging further data to be collected according to the request;
- if the user 3 is not new, requesting (S5) an insertion by the user 3 of his/its own nome_utente or codice_utente and of his/its own keyword;
- retrieving (S6) nome_utente or codice_utente and keyword on the data base 9 and checking the relative compliance of these data;
- in case of mismatch, new step of requesting (S5) the correct data, otherwise, in case of confirmed compliance, requesting (S7) the type of operation to be performed and arranging further data to be collected according to the request.

The step of requesting (S7) the type of operation to be performed comprises the following types of operation: Italian Trademark (MIT), Community Trademark (MCE), International Trademark (MIN), Italian Patent (BIT), European Patent (BCE) and International Patent (BIN). Obviously, these types of operation are only non-limiting examples of the process of the present invention, that can be applied, with suitable implementations, to several alternatives of "local" patent and trademark filings, as well as to other types of patents (utility models, ornamental models, plant varieties, semiconductor topographies, etc.).

In the particular case here described, if the type of requested operation to be performed in step (S7) is an Italian Trademark (MIT), the process further comprises the steps of:

- requesting (S8) whether the trademark is of the verbal (V) or figurative (F) type;
- if the trademark is of the verbal type (V), requesting (S9) the insertion of the word(s) of which the trademark is composed; if the trademark is of the figurative type (F), requesting (S10) the insertion of the possible word(s) of which the trademark is composed, requesting (S11) the insertion of the figurative trademark representation and requesting (S12) the possible specification of characterising colors;
- displaying (S13) the list of trademark classes, with related number and description for every class;
- choosing (S14) by the user (3) the desired class(es);
- requesting (S15) whether the type of operation is a trademark renewal;
- if the operation is a trademark renewal, requesting (S16) the data of the first and the last trademark filing and renewal: such data are composed of filing/renewal date and of filing/renewal number;
- requesting (S17) whether a professional representative has to be appointed for the trademark filing;
- if a representative has to be appointed, sending (S18) to the user 3 a related message and the corresponding duly-filled Power of Attorney as regards user data, representative data and type of operation to perform;
- if a representative has not to be appointed, requesting (S19) whether the user 3 wishes to perform a direct filing (DIR) or a filing through delegation (DEL);
- in case of filing through delegation (DEL), sending (S20) to the user 3 a related message and the corresponding duly-filled Letter of Delegation as regards user data and delegate data.

The step of requesting (S11) the insertion of the figurative trademark representation can provide for the attachment of a file containing the trademark representation in a suitable format, for instance of the *.pdf, *.jpeg, *.img type.

Moreover, the step of requesting (S16) the data of the first and last trademark filing and renewal is automatically performed by the managing and processing unit 1 in case the user 3 is already registered and the trademark has already been filed through such process.

If the type of operation to be performed requested in step (S7) is an Italian Trademark (MIT), the automatically compiling step (F3) comprises the following processings:

- Dati_Titolare: it inserts the owner's registry data in a Trademark Filing Form, a Trademark Declaration of Protection and a possible Power of Attorney for a professional representative;
- Dati_Rappresentante: it inserts in the Trademark Filing Form, in the Trademark Declaration of Protection and in the possible Power of Attorney the registry data of a professional representative stored on the storage means 9;
- Nome_Marchio: it inserts the trademark denomination in the Trademark Filing Form;
- Descrizione_Marchio: it inserts the trademark description in the Trademark Filing Form and in the Trademark Declaration of Protection; if the characters of the trademark description exceed the limit allowed by the filing Form, it inserts the surplus characters in following Enclosures till the characters are finished, then it computes the final number of Enclosures and it takes it on the Trademark Filing Form and on each one of the Enclosures, progressively numbering each one of the Enclosures starting from "01";
- Classi_Marchio: it counts the total number of selected Classes and inserts it in the Trademark Filing Form; it inserts the number and the description of the selected Classes in the Trademark Filing Form and in the Trademark Declaration of Protection; according to the type of Class, it inserts beside every one of them the letters "F", "C" and/ or "S" in the Trademark Filing Form; if the number and the description of the selected Classes exceed the established threshold for the First page of the Form and for every Enclosure, it inserts the surplus characters in following Enclosures till the characters are finished, then it computes the final number of Enclosures and it takes it on the Trademark Filing Form and on each one of the Enclosures, progressively numbering each one of the Enclosures starting from "01";
- Elenco_Documenti: it inserts in the column related to the list of the documents the numbers of filed copies apiece (the numbers of copies are stored on the storage means 9 according to the filing regulations in force); it gives a value to the form filling date using the system date;
- Tasse: it computes the amount of the filing fees (TD) through the equation:

$$TD = Tassa\_base + (N\_classi * Tassa\_classe) + Tassa\_LI$$

where N_classi is the number of selected Classes in addition to the first one and Tassa_LI is the possible Power of Attorney Fee; and it inserts the amount in the Trademark Filing Form;
- Cciaa: it inserts in the Trademark Filing Form the city of the Chamber of Commerce for the filing, the current year in letters and the foreseen filing date computed adding two business days to the current date; the foreseen filing date can be modified before producing the Trademark Filing Form;
- Documenti: it completes the Declaration of Protection, the possible Power of Attorney and the List of Classes with the number and description of every selected Class; and
- Bollettini: it compiles and prints the postal bulletins for the payment of the Filing Fees with Owner's data, amount of Fees and filing reason with the trademark name.

If the type of operation to be performed requested in step (S7) is an Italian Trademark (MIT), the step of producing (F4) comprises the following processings:

- Dichiarazione_Protezione: it stores on the storage means 9 and it allows printing the Declaration of Protection with the possible trademark logo (F) and the verbal trademark reproduction (V), and the possible Power of Attorney;
- Stelloncino: it stores on the storage means (9) and it allows printing the List of Classes with the number and description of every selected Class; and
- Verbale_Deposito: it stores on the storage means (9) and it allows printing the completed Trademark Filing Form.

If the type of operation to be performed requested in step (S7) is a Community Trademark (MCE), the process further comprises the steps of:

- requesting (S30) whether the trademark is of the verbal (V) or figurative (F) type;
- if the trademark is of the verbal type (V), requesting (S31) the insertion of the word(s) of which the trademark is composed; if the trademark is of the figurative type (F), requesting (S32) the insertion of the possible word(s) of which the trademark is composed, requesting (S33) the insertion of the figurative trademark representation and requesting (S34) the possible specification of characterising colours;
- displaying (S35) the list of trademark classes, with related number and description for every class;
- choosing (S36) by the user 3 the desired class(es);
- requesting (S37) if a professional representative has to be appointed for the trademark filing;
- if a representative has to be appointed, sending (S38) to the user 3 a related message and the corresponding duly-filled Power of Attorney as regards user data, representative data and type of operation to perform.

If the type of operation to be performed requested in step (S7) is a Community Trademark (MCE), the automatically compiling step (F3) comprises the following processings:

- Dati_Titolare: it inserts the owner's registry data in a Trademark Filing Form and in a possible Power of Attorney for a professional representative;
- Dati_Rappresentante: it inserts in the Trademark Filing Form and in the possible Power of Attorney the registry data of a professional representative stored on the storage means 9;
- Nome_Marchio: it inserts the trademark denomination in the Trademark Filing Form;
- Classi_Marchio: it inserts the number and description of the selected Classes in the Trademark Filing Form;
- Priorità_Seniorità: it fills out the Trademark Filing Form with the number and date of the possible Priority/Seniority documents;
- Tasse: it computes the amount of the Filing Fees (TD) through the equation:

$$TD = Tassa\_base + (N\_classi * Tassa\_classe)$$

where N_classi is the number of selected Classes over the third one; and it inserts TD, N_Classi and Tassa_classe in the Trademark Filing Form; and
- Documenti: it completes a list of documents that provides for the possible figurative trademark and the request for a copy of the Priority/Seniority document and the possible Power of Attorney.

If the type of operation to be performed requested in step (S7) is a Community Trademark (MCE), the step of producing (F4) comprises the following processings:

- Moduli_Deposito: it stores on the storage means 9 and it allows printing the complete Trademark Filing Form together with the possible figurative trademark reproduction (F).

If the type of operation to be performed required in step (S7) is an International Trademark (MIN), the process further comprises the steps of:

- requesting (S50) whether the trademark is of the verbal (V) or figurative (F) type;
- if the trademark is of the verbal type (V), requesting (S51) the insertion of the word(s) of which the trademark is composed; if the trademark is of the figurative type (F), requesting (S52) the insertion of the possible word(s) of which the trademark is composed, requesting (S53) the insertion of the figurative trademark representation and requesting (S54) the possible specification of characterising colors;
- displaying (S55) the list of trademark classes, with related number and description for every class;
- choosing (S56) by the user 3 the desired class(es);
- displaying (S57) the list of Countries to be designated with indication that they belong to the Madrid Agreement or Protocol;
- choosing (S58) by the user 3 the designated Country(ies);
- requesting (S59) whether a professional representative has to be appointed for filing the trademark;
- if a representative has to be appointed, sending (S60) to the user 3 a related message and the corresponding duly-filled Power of Attorney as regards user data, representative data and type of operation to perform.

If the type of operation to be performed required in step (S7) is an International Trademark (MIN), the automatically compiling step (F3) comprises the following processings:

- Dati_Titolare: it inserts the owner's registry data in a Trademark Filing Form, Trademark Filing Record and a possible Power of Attorney for a professional representative;
- Dati_Rappresentante: it inserts in the Trademark Filing Form, in the Trademark Filing Record and in the possible Power of Attorney the registry data of a professional representative stored on the storage means 9;
- Dati_MarchioItaliano: it completes the Trademark Filing Record with the data of the previous Italian Trademark Application;
- Nome_Marchio: it inserts the trademark denomination in the Trademark Filing Form;
- Descrizione_Marchio: it inserts the trademark description in the Trademark Filing Form;
- Classi_Marchio: it inserts the number and description of the selected Classes in the Trademark Filing Form;
- Paesi_designati: it inserts in the Trademark Filing Form the designated Countries;
- Tasse: it computes the amount of the Filing Fees (TD) through the equation:

$$TD = Tassa\_base + (N\_classi * Tassa\_classe) + (N\_Paesi\_A * Tassa\_Paese\_A) + (N\_Paesi\_P * Tassa\_Paese\_P)$$

where N_classi is the number of selected Classes over the third one, N_Paesi_A is the number of Countries of the Madrid Agreement with related Fee equal to Tassa_Paese_A, and N_Paesi_P is the number of Countries of the Madrid Protocol with related Fee equal to Tassa_Paese_P; and it inserts TD, N_Classi, Tassa_classe and N_Paesi_A+N_Paesi_P in the Trademark Filing Form; and
- Documenti: it completes a list of documents that provides for the possible figurative trademark and the possible Power of Attorney.

If the type of operation to be performed required in step (S7) is an International Trademark (MIN), the step of producing (F4) comprises the following processings:

- Moduli_Deposito: it stores on the storage means (9) and it allows printing the complete Trademark Filing Form together with the possible figurative trademark reproduction (F); and
- Verbale_Deposito: it stores on the storage means (9) and it allows printing the complete Trademark Filing Record.

If the type of operation to be performed required in step (S7) is an Italian Patent (BIT), the process further comprises the steps of:

- requesting (S21) the transmission of patent text and drawings, as well as of inventor's registry data;
- requesting (S22) whether a professional representative has to be appointed for the patent filing;
- if a representative has to be appointed, sending (S23) to the user 3 a related message and the corresponding duly-filled Power of Attorney as regards user data, representative data and type of operation to perform;
- if a representative has not to be appointed, requesting (S24) if the user 3 wishes to perform a direct filing (DIR) or a filing through delegation (DEL);
- in case of filing through delegation (DEL), sending (S25) to the user 3 a related message and the corresponding duly-filled Letter of Delegation as regards user data and delegate data.

The transmission of text and drawings required in the step of requesting (S21) can occur in electronic form through e-mail, and, in this case, the drawings ane sent in a suitable electronic format, for instance *.pdf, *.jpeg, *.img. Alternatively, the text and drawings can be transmitted in paper form through ordinary mail, priority mail or registered letter, or through facsimile.
If the type of operation to be performed required in step (S7) is an Italian Patent (BIT), the automatically compiling step (F3) comprises the following processings:

- Dati_Titolare: it inserts the owner's registry data in a Patent Filing Form, a Patent Summary and a possible Power of Attorney for a professional representative;
- Dati_Rappresentante: it inserts in the Patent Filing Form and in the possible Power of Attorney the registry data of a professional representative stored on the storage means 9;
- Titolo_Brevetto: it inserts the patent title in the Patent Filing Form, in the Patent Summary and in the possible Power of Attorney;
- Accessibilità_Inventori: it inserts one "X" in the box regarding Anticipated Accessibility S/N and it inserts inventor (s)'s Last Name and Name in the Patent Filing Form;

- Elenco_Documenti: it inserts in the column related to the list of documents the numbers of filed copies apiece (the numbers of copies are stored on the storage means 9 according to the regulations in force); it gives a value to the form filling date with the system date;
- Tasse: it computes the amount of the Filing Fees (TD) through the equation:

$$TD = Tassa\_base + K + Tassa\_LI$$

where K is a constant that depends on the number of pages of the patent and Tassa_LI it is the possible Power of Attorney Fee; and it inserts the amount in the Patent Filing Form;
- Cciaa: it inserts in the Patent Filing Form the city of the Chamber of Commerce for filing, the current year in letters and the foreseen filing date computed adding two business days to the current date, this foreseen filing date deposit being able to be modified before producing the Patent Filing Form;
- Documenti: it completes the Patent Summary by inserting the established text and drawings and the possible Power of Attorney; and
- Bollettini: it compiles and prints the postal bulletins for the payment of the Filing Fees with Owner's data, amount of Fees and filing reason as "patent application filing".

If the type of operation to be performed required in step (S7) is an Italian Patent (BIT), the step of producing (F4) comprises the following processings:

- Testo_Brevetto: it stores on the storage means 9 and it allows printing the patent description text and the possible Power of Attorney;
- Disegni_Brevetto: it stores on the storage means 9 and it allows printing the patent drawings; and
- Verbale_Deposito: it stores on the storage means 9 and it allows printing the completed Patent Filing Form.

If the type of operation to be performed required in step (S7) is an European Patent (BCE), the process further comprises the steps of:

- requesting (S39) the transmission of the patent text and drawings, of the inventor's registry data and of the list of Countries to be designated;
- requesting (S40) whether a professional representative has to be appointed for filing the patent;
- if a professional representative has to be appointed, sending (S41) to the user 3 a related message and the corresponding duly-filled Power of Attorney as regards user data, representative data and type of operation to perform.

Also in this case, the transmission of text and drawings requested in the step of requesting (S39) can be carried out in electronic form through e-mail, and the drawings are sent in a suitable electronic format, for instance *.pdf, *.jpeg, *.img.; or, alternatively, the transmission of required text and drawings can be carried out through ordinary mail, priority mail or registered letter, or through facsimile.

If the type of operation to be performed required in step (S7) is an European Patent (BCE), the automatically compiling step (F3) comprises the following processings:

- Dati_Titolare: it inserts the owner's registry data in a Patent Filing Form and a possible Power of Attorney for a professional representative;
- Dati_Rappresentante: it inserts in the Patent Filing Form and in the possible Power of Attorney the registry data of a professional representative stored on the storage means 9;
- Titolo_Brevetto: it inserts the patent title in the Patent Filing Form and in the possible Power of Attorney;
- Elenco_Documenti: it inserts in the columns related to the list of documents the numbers of filed copies apiece (the numbers of copies are stored on the storage means 9 according to the regulations in force); it gives a value to the form filling date with the system date;
- Dati_Inventore: it inserts the registry data of one or more inventors in a Inventor Designation Form, if the inventor(s) is(are) different from the patent owner;
- Priorità: it inserts filing number and date of the priority document in the Patent Filing Form;
- Tasse: it computes the amount of the Filing Fees (TD) through the equation:

$$TD = Tassa\_deposito + Tassa\_ricerca$$

where Tassa_ricerca is the Patent Search Fee; and it inserts TD, Tassa_deposito and Tassa_ricerca in a Fee Calculation Form; and

- Documenti: it completes the Patent Filing Forms, the Fee Calculation Form and the possible Designation of Inventor and Power of Attorney.

If the type of operation to be performed required in step (S7) is an European Patent (BCE), the step of producing (F4) comprises the following processings:

- Testo_Brevetto: it stores on the storage means 9 and it allows printing the patent description text and the possible Power of Attorney;
- Disegni_Brevetto: it stores on the storage means 9 and it allows printing the patent drawings; and
- Moduli_Deposito: it stores on the storage means 9 and it allows printing the Patent Filing Form, the Fee Calculation Form and the possible Designation of Inventor.

If the type of operation to be performed required in step (S7) is an International Patent (BIN), the process further comprises the steps of:

- requesting (S61) the transmission of the patent text and drawings, of the inventor's registry data and of the list of Countries to be designated;
- requesting (S62) whether a professional representative has to be appointed for filing the patent;
- if a professional representative has to be appointed, sending (S63) to the user 3 a related message and the corresponding duly-filled Power of Attorney as regards user data, representative data and type of operation to perform.

As before, the transmission of text and drawings requested in the step of requesting (S61) can be carried out in electronic form through e-mail, and the drawings are sent in a suitable electronic format, for instance *.pdf, *.jpeg,

* .img.; or, alternatively, the transmission of required text and drawings can be carried out through ordinary mail, priority mail or registered letter, or through facsimile.

If the type of operation to be performed required in step (S7) is an International Patent (BIN), the automatically compiling step (F3) comprises the following processings:

- Dati_Titolare: it inserts the owner's registry data in a Patent Filing Form and a possible Power of Attorney for a professional representative;
- Dati_Rappresentante: it inserts in the Patent Filing Form and in the possible Power of Attorney the registry data of a professional representative stored on the storage means 9;
- Titolo_Brevetto: it inserts the patent title in the Patent Filing Form and in the possible Power of Attorney;
- Paesi_Designati: it inserts in the Patent Filing Form the designated Countries;
- Priorità: it inserts filing number and date of the priority document in the Patent Filing Form;
- Elenco_Documenti: it inserts in the columns related to the list of the documents the numbers of filed copies apiece, (the numbers of copies are stored on the storage means 9 according to the regulations in force); it computes and inserts the number of pages of the patent, divided into request, description, claims, summary and drawings; Tasse: it computes the amount of the Filing Fees (TD) through the equation:

$$TD = Tassa\_trasmissione + Tassa\_ricerca + Tassa\_base + (N\_pagine * Tassa\_pagina) +$$

$$(N\_paesi\_designati * Tassa\_designazione)$$

where N_pagine is the number of pages over the thirtieth one with the related Tassa_pagina and N-Paesi_designati > Limite_max_designazioni_pagate; and it inserts TD, Tassa_trasmissione, Tassa_ricerca, Tassa_Base, (N-pages + 30), Tassa_pagina, N_paesi_designati and Tassa_designazione in a Fee Calculation Form; and

- Documenti: it completes the Patent Filing Forms, the Fee Calculation Form and the possible Power of Attorney.

If the type of operation to be performed required in step (S7) is an International Patent (BIN), the step of producing (F4) comprises the following processings:

- Testo_Brevetto: it stores on the storage means 9 and it allows printing the patent description text and the possible Power of Attorney;

- Disegni_Brevetto: it stores on the storage means 9 and it allows printing the patent drawings; and
- Moduli_Deposito: it stores on the storage means 9 and it allows printing the Patent Filing Form and the Fee Calculation Form.

When the process of the invention is applied to systems connected to a network, the steps of sending (S18, S20, S23, S25, S38, S41, S60, S63) material to the user 3 can be performed through e-mail. Otherwise, or if the case so requires, the steps of sending (S18, S20, S23, S25, S38, S41, S60, S63) material to the user 3 can be performed through ordinary mail, priority mail or registered letter or through facsimile.

Finally, the step of computing (F2), by the managing and processing unit 1, the total amount (Itotale) of the operation is performed according to the following formula:

$$Itotale = Tasse + Onorari + I.V.A.$$

where Tasse is the amount of the computed fees, Onorari is the amount of the honoraries for the type of activity stored on the storage means 9 and I.V.A. is the actual legal percentage of the Value Added Tax applied as percentage of the Onorari.

In the step of computing (F2), the check of the performed payment, by the user 3, of the amount of the requested operation of creating, compiling and producing the forms and documents can happen through connection to banking circuits for the validation of transactions through credit cards. Alternatively, such check can happen following the verification of the performed payment of the amount through bank credit transfer, check or payment on postal account.

As stated above, the process of the invention can be performed through an automated system that comprises:

- means 1, 5, 7, 9 for collecting all the necessary data, that allow electronically compiling the displayed masks and electronically receiving data from the user 3;
- means 1 for checking the performed payment by the user 3 of the requested operation of creating, compiling and producing the forms and documents;
- means 1 for automatically compiling the requested forms and documents depeding on the provided data; and
- means 1, 5, 7, 9 for producing the complied forms and documents.

The inventive process can be realized through a computer program product comprising a set of instructions adapted to realize it. Such program product can be stored in the storage means 9 of the system realized through a dedicated computer, further comprising managing, processing and control means 1, 5, 7 adapted to perform the aforesaid computer program product to implement the inventive process.

**Claims**

1. Automated process for creating, compiling and producing forms and documents for filing patent and trademark applications, **characterized in that** it comprises the steps of:

   - collecting (F1) all necessary data, said step of collecting (F1) being performed through an electronic compilation of displayed masks and an electronic transmission of data by a user (3) to a managing and processing unit (1);
   - computing (F2), by the managing and processing unit (1), a total amount for an operation of creating, compiling and producing forms and documents required by the user (3), said step of computing (F2) further comprising a check of a performed payment by the user (3) of the total amount of the requested operation;
   - automatically compiling (F3), by the managing and processing unit (1), the requested forms and documents depending on provided data; and
   - producing (F4), by the managing and processing unit (1), the compiled forms and documents.

2. Process according to Claim 1, **characterized in that** said step of producing (F4) is performed by printing forms and documents on paper media and their related physical transmission to the user (3).

3. Process according to Claim 1, **characterized in that** said step of producing (F4) is performed by storing the forms and documents on electronic files and related electronic transmission to the user (3).

**4.** Process according to one any of Claims 1 to 3, **characterized in that** it further comprises the step (F5) of filing the compiled patent and trademark application forms and documents by the Authorities responsible for receiving them.

**5.** Process according to Claim 1, **characterized in that** said step of collecting (F1) comprises the steps of:

- checking (S1) if the user (3) is a new user or an already-registered user;
- if the user (3) is new, requesting (S2) registry and fiscal data of the user (3);
- assigning (S3) to the user (3) a nome_utente, a codice_utente and a keyword;
- storing (S4) nome_utente, codice_utente and keyword in a data base (9);
- requesting (S7) a type of operation to be performed and arranging further data to be collected according to the request;
- if the user (3) is not new, requesting (S5) an insertion from the user (3) of his own nome_utente or codice_utente and of his own keyword;
- retrieving (S6) the nome_utente or codice_utente and the keyword on the data base (9) and checking the related compliance of these data;
- in case of mismatch, new step of requesting (S5) the correct data, otherwise, in case of confirmed compliance, requesting (S7) the type of operation to be performed and arranging further data to be collected according to the request.

**6.** Process according to Claim 5, **characterized in that** the registry data of the user (3) comprise name or denomination or legal name, address, possible date and place of birth, telephone and fax numbers and the fiscal data of the user (3) comprise fiscal code and/or V.A.T.

**7.** Process according to Claim 5, **characterized in that** said step of requesting (S7) the type of operation to be performed comprises the following types of operation: Italian Trademark (MIT), Community Trademark (MCE), International Trademark (MIN), Italian Patent (BIT), European Patent (BCE) and International Patent (BIN).

**8.** Process according to Claim 7, **characterized in that**, if the type of operation to be performed required in step (S7) is an Italian Trademark (MIT), said process further comprises the steps of:

- requesting (S8) whether the trademark is of a verbal (V) or a figurative (F) type;
- if the trademark is of the verbal type (V), requesting (S9) an insertion of word(s) of which the trademark is composed; if the trademark is of the figurative type (F), requesting (S10) an insertion of possible word(s) of which the trademark is composed, requesting (S11) an insertion of a figurative trademark representation and requesting (S12) a possible specification of characterising colours;
- displaying (S13) a list of trademark classes, with related number and description for every class;
- choosing (S14) by the user (3) the desired class(es);
- requesting (S15) whether the type of operation is a trademark renewal;
- if the operation is a trademark renewal, requesting (S16) data of first and last trademakr filing and renewal, said data being composed of filing/renewal date and filing/renewal number;
- requesting (S17) whether a professional representative has to be appointed for filing the trademark;
- if a professional representative has to be appointed, sending (S18) to the user (3) a related message and the corresponding duly-filled Power of Attorney as regards user data, representative data and type of operation to perform;
- if a professional representative has not to be appointed, requesting (S19) whether the user (3) wishes to perform a direct filing (DIR) or a filing through delegation (DEL);
- in case of filing through delegation (DEL), sending (S20) to the user (3) a related message and the corresponding duly-filled Letter of Delegation as regards user data and delegate data.

**9.** Process according to Claim 8, **characterized in that** said step of requesting (S11) an insertion of a figurative trademark representation provides for an attachment of a file containing a trademark representation in a suitable format, for instance *.pdf, *.jpeg, *.img type.

**10.** Process according to Claim 8, **characterized in that** said step of requesting (S16) data about first and last trademark filing and renewal is automatically performed by the managing and processing unit (1) in case the user (3) is already registered and the trademark has already been filed through said process.

**11.** Process according to Claim 7, **characterized in that**, if the type of operation to be performed required in step (S7) is an Italian Trademark (MIT), said automatically compiling step (F3) comprises the following processings:

- Dati_Titolare: it inserts the owner's registry data in a Trademark Filing Form, a Trademark Declaration of Protection and a possible Power of Attorney for a professional representative;
- Dati_Rappresentante: it inserts in the Trademark Filing Form, in the Trademark Declaration of Protection and in the possible Power of Attorney the registry data of a professional representative stored on storage means (9);
- Nome_Marchio: it inserts the trademark denomination in the Trademark Filing Form;
- Descrizione_Marchio: it inserts the trademark description in the Trademark Filing Form and in the Trademark Declaration of Protection; if the characters of the trademark description exceed the limit allowed by the Filing Form, it inserts the surplus characters in following Enclosures till the characters are finished, then it computes the final number of Enclosures and it takes it on the Trademark Filing Form and on each one of the Enclosures, progressively numbering each one of the Enclosures starting from "01";
- Classi_Marchio: it counts the total number of selected Classes and it inserts it in the Trademark Filing Form; it inserts the number and description of selected Classes in the Trademark Filing Form and in the Trademark Declaration of Protection; according to the type of Class, it inserts beside every Class the letters "F", "C" and/ or "S" in the Trademark Filing Form; if the number and description of the selected Classes exceed the established threshold for the First page of the Form and for every Enclosure, it inserts the surplus characters in following Enclosures till the characters are finished, then it computes the final number of Enclosures and it takes it on the Trademark Filing Form and on each one of the Enclosures, progressively numbering each one of the Enclosures starting from "01";
- Elenco_Documenti: it inserts in the column related to the list of documents the numbers of filed copies apiece, said numbers of copies being stored on said storage means (9); it gives a value to the form filling date with the system date;
- Tasse: it computes the amount of the Filing Fees (TD) through the equation:

$$TD = Tassa\_base + (N\_classi * Tassa\_classe) + Tassa\_LI$$

where N_classi is the number of selected Classes over the first and Tassa_LI is the possible Power of Attorney Fee; and it inserts the amount in the Trademark Filing Form;
- Cciaa: it inserts in the Trademark Filing Form the city of the Chamber of Commerce for filing, the current year in letters and the foreseen filing date computed by adding two business days to the current date, said foreseen filing date being able to be modified before producing the Trademark Filing Form;
- Documenti: it completes the Declaration of Protection, the possible Power of Attorney and the List of Classes with the number and description of every selected Class; and
- Bollettini: it compiles and prints the postal bulletins for the payment of the Filing Fees with Owner's data, amount of Fees and filing reason with the trademark name.

**12.** Process according to Claim 7, **characterized in that**, if the type of operation to be performed required in step (S7) is an Italian Trademark (MIT), said step of producing (F4) comprises the following processings:

- Dichiarazione_Protezione: it stores on the storage means (9) and it allows printing the Declaration of Protection with the possible trademark logo (F) and the verbal trademark reproduction (V), and the possible Power of Attorney;
- Stelloncino: it stores on the storage means (9) and allows printing the List of Classes with the number and description of every selected Class; and
- Verbale_Deposito: it stores on the storage means (9) and allows printing the complete Trademark Filing Form.

**13.** Process according to Claim 7, **characterized in that**, if the type of operation to be performed required in step (S7) is a Community Trademark (MCE), said process further comprises the steps of:

- requesting (S30) if the trademark is of a verbal (V) or figurative (F) type;
- if the trademark is of the verbal type (V), requesting (S31) an insertion of word(s) of which the trademark is composed; if the trademark isof the figurative type (F), requesting (S32) an insertion of possible word(s) of which the trademark is composed, requesting (S33) an insertion of the figurative trademark representation and requesting (S34) a possible specification of characterising colours;
- displaying (S35) the list of trademark classes, with related number and description for every class;

- choosing (S36) by the user (3) the desired class(es);
- requesting (S37) whether a professional representative has to be appointed for filing the trademark;
- if a professional representative has to be appointed, sending (S38) to the user (3) a related message and the corresponding duly-filled Power of Attorney as regards user data, representative data and type of operation to perform.

14. Process according to Claim 7, **characterized in that**, if the type of operation to be performed required in step (S7) is a Community Trademark (MCE), said automatically compiling step (F3) comprises the following processings:

- Dati_Titolare: it inserts owner's registry data in a Trademark Filing Form and a possible Power of Attorney for a professional representative;
- Dati_Rappresentante: it inserts in the Trademark Filing Form and in the possible Power of Attorney registry data of a professional representative stored on storage means (9);
- Nome_Marchio: it inserts the trademark denomination in the Trademark Filing Form;
- Classi_Marchio: it inserts the number and description of selected Classes in the Trademark Filing Form;
- Priorità_Seniorità: it fills out the Trademark Filing Form with number and date of possible priority/seniority documents;
- Tasse: it computes the amount of the Filing Fees (TD) through the equation:

$$TD = Tassa\_base + (N\_classi * Tassa\_classe)$$

where N_classi is the number of selected Classes over the third one; and it inserts TD, N_Classi and Tassa_classe in the Trademark Filing Form; and
- Documenti: it completes a list of documents that provides for the possible figurative trademark and the requesting of a copy of the priority/seniority document and the possible Power of Attorney.

15. Process according to Claim 7, **characterized in that**, if the type of operation to be performed required in step (S7) is a Community Trademark (MCE), said step of producing (F4) comprises the following processings:

- Moduli_Deposito: it stores on the storage means (9) and it allows printing the complete Trademark Filing Form together with the possible figurative trademark reproduction (F).

16. Process according to Claim 7, **characterized in that**, if the type of operation to be performed required in step (S7) is an International Trademark (MIN), said process further comprises the steps of:

- requesting (S50) whether the trademark is of a verbal (V) or figurative (F) type;
- if the trademark is of the verbal type (V), requesting (S51) an insertion of word(s) of which the trademark is composed; if the trademark is of the figurative type (F), requesting (S52) an insertion of possible word(s) of which the trademark is composed, requesting (S53) an insertion of the figurative trademark representation and requesting (S54) a possible specification of characterising colours;
- displaying (S55) the list of trademark classes, with related number and description for every class;
- choosing (S56) by the user (3) the desired class(es);
- displaying (S57) the list of Countries to be designated with indication of whether they belong to Madrid Agreement or Protocol;
- choosing (S58) by the user (3) the designated Country(ies);
- requesting (S59) whether a professional representative has to be appointed for filing the trademark;
- if a professional representative has to be appointed, sending (S60) to the user (3) a related message and the corresponding duly-filled Power of Attorney as regards user data, representative data and type of operation to perform.

17. Process according to Claim 7, **characterized in that**, if the type of operation to be performed required in step (S7) is an International Trademark (MIN), said automatically compiling step (F3) comprises the following processings:

- Dati_Titolare: it inserts owner's registry data in a Trademark Filing Form, a Trademark Filing Record and a possible Power of Attorney for a professional representative;
- Dati_Rappresentante: it inserts in the Trademark Filing Form, in the Trademark Filing Record and in the possible Power of Attorney the registry data of a professional representative stored on storage means (9);

- Dati_MarchioItaliano: it completes the Trademark Filing Record with the data of the previous Italian Trademark Application;
- Nome_Marchio: it inserts the trademark denomination in the Trademark Filing Form;
- Descrizione_Marchio: it inserts the trademark description in the Trademark Filing Form;
- Classi_Marchio: it inserts the number and description of selected Classes in the Trademark Filing Form;
- Paesi_designati: it inserts in the Trademark Filing Form the designated Countries;
- Tasse: it computes the amount of the Filing Fees (TD) through the equation:

$$TD = Tassa\_base + (N\_classi * Tassa\_classe) + (N\_Paesi\_A * Tassa\_Paese\_A) + (N\_Paesi\_P * Tassa\_Paese\_P)$$

where N_classi is the number of selected Classes over the third one, N_Paesi_A is the number of Countries of the Madrid Agreement with related Fee equal to Tassa_Paese_A, and N_Paesi_P is the number of Countries of the Madrid Protocol with related Fee equal to Tassa_Paese_P; and it inserts TD, N_Classi, Tassa_classe and N_Paesi_A+N_Paesi_P in the Trademark Filing Form; and
- Documenti: it completes a list of documents that provides for the possible figurative trademark and the possible Power of Attorney.

18. Process according to Claim 7, **characterized in that**, if the type of operation to be performed required in step (S7) is an International Trademark (MIN), said step of producing (F4) comprises the following processings:

- Moduli_Deposito: it stores on the storage means (9) and it allows printing the complete Trademark Filing Form together with the possible figurative trademark reproduction (F); and
- Verbale_Deposito: it stores on the storage means (9) and it allows printing the complete Trademark Filing Record.

19. Process according to Claim 7, **characterized in that**, if the type of operation to be performed required in step (S7) is an Italian Patent (BIT), said process further comprises the steps of:

- requesting (S21) a transmission of patent text and drawings, as well as of inventor's registry data;
- requesting (S22) whether a professional representative has to be appointed for filing the patent;
- if a professional representative has to be appointed, sending (S23) to the user (3) a related message and the corresponding duly-filled Power of Attorney as regards user data, representative data and type of operation to perform;
- if a professional representative has not to be appointed, requesting (S24) whether the user (3) desires to perform a direct filing (DIR) or a filing through delegation (DEL);
- in case of filing through delegation (DEL), sending (S25) to the user (3) a related message and the corresponding duly-filled Letter of Delegation as regards user data and delegate data.

20. Process according to Claim 19, **characterized in that** the transmission of text and drawings requested in said step of requesting (S21) is performed in electronic form through e-mail, the drawings being sent in a suitable electronic format, for instance *.pdf, *.jpeg, *.img.

21. Process according to Claim 19, **characterized in that** the transmission of text and drawings requested in said step of requesting (S21) is performed on paper media through ordinary mail, priority mail or registered letter, or through facsimile.

22. Process according to Claim 7, **characterized in that**, if the type of operation to be performed required in step (S7) is an Italian Patent (BIT), said automatically compiling step (F3) comprises the following processings:

- Dati_Titolare: it inserts owner's registry data in a Patent Filing Form, a Patent Summary and a possible Power of Attorney for a professional representative;
- Dati_Rappresentante: it inserts in the Patent Filing Form and in the possible Power of Attorney the registry data of a professional representative stored on storage means (9);
- Titolo_Brevetto: it inserts the patent title in the Patent Filing Form, in the Patent Summary and in the possible Power of Attorney;

- Accessibilità_Inventori: it inserts one" X" in the box about Anticipated Accessibility S/N and it inserts inventor (s)'s Last name and Name in the Patent Filing Form;
- Elenco_Documenti: it inserts in the column related to the list of documents the numbers of filed copies apiece, said numbers of copies being stored on said storage means (9); it gives a value to the form filling date with the system date;
- Tasse: it computes the amount of the Filing Fees (TD) through the equation:

$$TD = Tassa\_base + K + Tassa\_LI$$

where K is a constant that depends on the number of pages of the patent and Tassa_LI is the possible Power of Attorney Fee; and it inserts the amount in the Patent Filing Form;
- Cciaa: it inserts in the Patent Filing Form the city of the Chamber of Commerce for filing, the current year in letters and the foreseen filing date computed by adding two business days to the current date, said foreseen filing date being able to be modified before producing the Patent Filing Form;
- Documenti: it completes the Patent Summary by inserting the established text and drawing and the possible Power of Attorney; and
- Bollettini: it compiles and prints the postal bulletins for the payment of the Filing Fees with Owner's data, amount of Fees and filing reason as "patent application filing".

23. Process according to Claim 7, **characterized in that**, if the type of operation to be performed required in step (S7) is an Italian Patent (BIT), said step of producing (F4) comprises the following processings:

- Testo_Brevetto: it stores on the storage means (9) and it allows printing the patent description text and the possible Power of Attorney;
- Disegni_Brevetto: it stores on the storage means (9) and it allows printing the patent drawings; and
- Verbale_Deposito: it stores on the storage means (9) and it allows printing the complete Patent Filing Form.

24. Process according to Claim 7, **characterized in that**, if the type of operation to be performed required in step (S7) is an European Patent (BCE), said process further comprises the steps of:

- requesting (S39) a transmission of patent text and drawings, of inventor(s)'s registry data and pf the list of Countries to be designated;
- requesting (S40) whether a professional representative has to be appointed for filing the patent;
- if a professional representative has to be appointed, sending (S41) to the user (3) a related message and the corresponding duly-filled Power of Attorney as regards user data, representative data and type of operation to perform.

25. Process according to Claim 24, **characterized in that** the transmission of text and drawings requrested in said step of requesting (S39) is performed in electronic form through e-mail, the drawings being sent in a suitable electronic format, for instance *.pdf, *.jpeg, *.img.

26. Process according to Claim 24, **characterized in that** the transmission of text and drawings requested in said step of requesting (S39) is performed on paper media through ordinary mail, priority mail or registered letter, or through facsimile.

27. Process according to Claim 7, **characterized in that**, if the type of operation to be performed required in step (S7) is an European Patent (BCE), said automatically compiling step (F3) comprises the following processings:

- Dati_Titolare: it inserts owner's registry data in a Patent Filing Form and a possible Power of Attorney for a professional representative;
- Dati_Rappresentante: it inserts in the Patent Filing Form and in the possible Power of Attorney the registry data of a professional representative stored on storage means (9);
- Titolo_Brevetto: it inserts the patent title in the Patent Filing Form and in the possible Power of Attorney;
- Elenco_Documenti: it inserts in the columns related to the list of documents the numbers of filed copies apiece, said numbers of copies being stored on said storage means (9); it gives a value to the form filling date with the system date;
- Dati_Inventore: it inserts registry data of one or more inventors in a Form for a Designation of Inventor(s), if the inventor(s) is(are) different from the owner(s);
- Priorità: it inserts filing number and date of the priority document in the Patent Filing Form;
- Tasse: it computes the amount of the Filing Fees (TD) through the equation:

$$TD = Tassa\_deposito + Tassa\_ricerca$$

where Tassa_ricerca is the Patent Search Fee; and it inserts TD, Tassa_deposito and Tassa_ricerca in a Fee Calculation Form; and
- Documenti: it completes the Patent Filing Forms, the Fee Calculation Form and the possible Designation of Inventor and Power of Attorney.

28. Process according to Claim 7, **characterized in that**, if the type of operation to be performed required in step (S7) is an European Patent (BCE), said step of producing (F4) comprises the following processings:

- Testo_Brevetto: it stores on the storage means (9) and it allows printing the patent description text and the possible Power of Attorney;
- Disegni_Brevetto: it stores on the storage means (9) and it allows printing the patent drawings; and
- Moduli_Deposito: it stores on the storage means (9) and it allows printing the Patent Filing Form, the Fee Calculation Form and the possible Designation of Inventor.

29. Process according to Claim 7, **characterized in that**, if the type of operation to be performed required in step (S7) is an International Patent (BIN), said process further comprises the steps of:

- requesting (S61) a transmission of patent text and drawings, of inventor(s)'s registry data and of the list of Countries to be designated;
- requesting (S62) whether a professional representative has to be appointed for filing the patent;
- if a professional representative has to be appointed, sending (S63) to the user (3) a related message and the corresponding duly-filled Power of Attorney as regards user data, representative data and type of operation to perform.

30. Process according to Claim 29, **characterized in that** the transmission of text and drawings requested in said step of requesting (S61) is performed in electronic form through e-mail, the drawings being sent in a suitable electronic format, for instance *.pdf, *.jpeg, *.img.

31. Process according to Claim 29, **characterized in that** the transmission of text and requested drawings in said step of requesting (S61) is performed on paper media through ordinary mail, priority mail or registered letter, or through facsimile.

32. Process according to Claim 7, **characterized in that**, if the type of operation to be performed required in step (S7) is an International Patent (BIN), said automatically compiling step (F3) comprises the following processings:

- Dati_Titolare: it inserts owner's registry data in a Patent Filing Form and a possible Power of Attorney for a professional representative;
- Dati_Rappresentante: it inserts in the Patent Filing Form and in the possible Power of Attorney the registry data of a professional representative stored on storage means (9);
- Titolo_Brevetto: it inserts the patent title in the Patent Filing Form and in the possible Power of Attorney;
- Paesi_Designati: it inserts in the Patent Filing Form the designated Countries;
- Priorità: it inserts filing number and date of the priority document in the Patent Filing Form;
- Elenco_Documenti: it inserts in the columns related to the list of documents the numbers of filed copies apiece, said numbers of copies being stored on said storage means (9); it computes and inserts the number of pages of the patent, divided into request, description, claims, abstract and drawings;
- Tasse: it computes the amount of the Filing Fees (TD) through the equation:

$$TD = Tassa\_trasmissione + Tassa\_ricerca + Tassa\_base + (N\_pagine * Tassa\_pagina) +$$

(N_paesi_designati * Tassa_designazione)

where N_pagine is the number of pages over the thirtieth one with the related Tassa_pagina and N-Paesi_designati > Limite_max_designazioni_pagate; and it inserts TD, Tassa_trasmissione, Tassa_ricerca, Tassa_Base, (N-pages + 30), Tassa_pagina, N_paesi_designati and Tassa_designazione in a Fee Calculation Form; and

- Documenti: it completes the Patent Filing Forms, the Fee Calculation Form and the possible Power of Attorney.

33. Process according to Claim 7, **characterized in that**, if the type of operation to be performed required in step (S7) is an International Patent (BIN), said step of producing (F4) comprises the following processings:

- Testo_Brevetto: it stores on the storage means (9) and it allows printing the patent description text and the possible Power of Attorney;
- Disegni_Brevetto: it stores on the storage means (9) and it allows printing the patent drawings; and
- Moduli_Deposito: it stores on the storage means (9) and it allows printing the Patent Filing Form and the Fee Calculation Form.

34. Process according to any one of Claims 7 to 33, **characterized in that** said steps of sending (S18, S20, S23, S25, S38, S41, S60, S63) material to the user (3) are performed through e-mail.

35. Process according to any one of Claims 7 to 33, **characterized in that** said steps of sending (S18, S20, S23, S25, S38, S41, S60, S63) material to the user (3) are performed through ordinary mail, priority mail or registered letter or through facsimile.

36. Process according to any one of the previous Claims, **characterized in that** said step of computing (F2), by the managing and processing unit (1), the total amount (Itotale) of an operation is performed according to the following formula: Itotale = Tasse + Onorari + I.V.A.
where Tasse is the amount of computed fees, Onorari is the amount of honoraries for a type of activity stored on said storage means (9) and I.V.A. is the actual legal percentage of the Value Added Tax applied as percentage of Onorari.

37. Process according to any one of the previous Claims, **characterized in that**, in the step of computing (F2), the check of performed payments of an amount by the user (3) for a requested operation of creating, compiling and producing forms and documents is performed through connection to banking circuits for the validation of transactions through credit cards.

38. Process according to any one of Claims 1 to 37, **characterized in that**, in the step of computing (F2), the ccheck of performed payments of an amount by the user (3) for a requested operation of creating, compiling and producing forms and documents is performed through a verification of the performed payment of the amount through bank credit transfer, check or payment on postal account.

39. Automated system for creating, compiling and producing forms and documents for filing patent and trademark applications, **characterized in that** it comprises:

- means (1, 5, 7, 9) for collecting all necessary data, said means for collecting (1) allowing an electronic compilation of displayed masks and an electronic receipt of data from a user (3);
- means (1) for checking a performed payment by the user (3) for a requested operation of creating, compiling and producing said forms and documents;
- means (1) for automatically compiling requested forms and documents depending on provided data; and
- means (1, 5, 7, 9) for producing compiled forms and documents.

40. System according to Claim 39, comprising a managing and processing unit (1) connected to a plurality of users (3) in a direct or remote way, said managing and processing unit (1) being equipped with displaying means (5), data entering means (7) and storage means (9) on which both the programs that realize the process according to any one of Claims 1 to 38 and the files containing the information used by the process itself are stored.

41. Computer program product comprising a set of instructions adapted to realize the process according to any one of Claims 1 to 38.

42. Computer comprising storage means (9) in which a computer program product according to Claim 41 is stored, and further comprising managing, processing and control means (1, 5, 7) adapted to execute the computer program product according to Claim 41 to implement the process according to any one of Claims 1 to 38.

Fig. 1

Fig. 2

F1

S

N

S2

S1

S5

S3

S6

S4

S7

N

OK?

S

Fig. 4    Fig. 6    Fig. 8    Fig. 9    Fig. 7    Fig. 5

Fig. 3

F1

F2

F3

F4

F5

Fig. 2

Fig. 3

BIT

S21

S22

S23

S

N

S24

DIR

DEL

FINE

S25

Fig. 5

Fig. 4

Fig. 6

Fig. 7

Fig. 9

Fig. 8

F3

DATI_TITOLARE

DATI_RAPPRESENTANTE

NOME_MARCHIO

DESCRIZIONE_MARCHIO

CLASSI_MARCHIO

ELENCO_DOCUMENTI

TASSE

CCIAA

DOCUMENTI

BOLLETTINI

Fig. 10

F3

DATI_TITOLARE

DATI_RAPPRESENTANTE

TITOLO_BREVETTO

ACCESSIBILITA'_INVENTORI

ELENCO_DOCUMENTI

TASSE

CCIAA

DOCUMENTI

BOLLETTINI

Fig. 12

F4

DICHIARAZIONE_PROTEZIONE

STELLONCINO

VERBALE_DEPOSITO

Fig. 11

F4

TESTO_BREVETTO

DISEGNO_BREVETTO

VERBALE_DEPOSITO

Fig. 13

F3

DATI_TITOLARE

DATI_RAPPRESENTANTE

NOME_MARCHIO

CLASSI_MARCHIO

PRIORITA'_SENIORITA'I

TASSE

DOCUMENTI

Fig. 14

F4

MODULI_DEPOSITO

Fig. 15

Fig. 16

Fig. 18

Fig. 17

Fig. 19

Fig. 20

Fig. 21